# EUROPEAN PATENT APPLICATION

(11) **EP 2 720 186 A1**
(43) Date of publication of application: **16.04.2014**
(21) Application number: 13275023.3
(22) Date of filing: 07.02.2013
(51) Int. Cl.: G06Q 30/06, G06Q 10/08, G09F 3/20

(54) **Electronic tag device, electronic shelf labeling system, and display refresh method of electronic tag device**

(30) Priority: 12.10.2012 KR 20120113816
(71) Applicant: Samsung Electro-Mechanics Co., Ltd, Suwon, Gyunggi-Do (KR)
(72) Inventor: Kim,, Su Mi, Gyunggi-do (KR); Byun,, Gi Young, Gyunggi-do (KR)
(74) Representative: Potter Clarkson LLP

(57) **Abstract**

There are provided an electronic tag device, an electronic shelf labeling system, and a display refresh method of an electronic tag device. The electronic tag device includes: a wireless communications unit performing wireless communications according to a preset communications protocol; a control unit controlling communications with a plurality of gateways and a server through the wireless communications unit and controlling an output of data included in a received signal to a display; a memory unit storing the data therein according to the controlling of the control unit; a display unit outputting the data to the display according to the controlling of the control unit; and a power supply unit supplying operating power according to the controlling of the control unit, wherein the control unit refreshes the display unit when a preset display refresh condition is satisfied.

## Description

### CROSS-REFERENCE TO RELATED APPLICATIONS

This application claims the priority of Korean Patent Application No. 10-2012-0113816 filed on October 12, 2012, in the Korean Intellectual Property Office, the disclosure of which is incorporated herein by reference.

### BACKGROUND OF THE INVENTION

### Field of the Invention

The present invention relates to an electronic tag device, an electronic shelf labeling system, and a display refresh method of an electronic tag device.

### Description of the Related Art

In general, an electronic shelf labeling (ESL) system refers to a system that may be installed in a location in which products are displayed and automate the display of product information. In the ESL system, several thousand tags or cost display terminals may configure a wireless network to perform wireless communications with a centralized gateway (GW).

Generally, an electronic shelf labeling system is configured of relatively complicated network devices (for example, a server, a gateway, a tag and the like). In the case in which the electronic shelf labeling system is configured of several superordinate server systems in a system field, the tag, a subordinate network device, needs to be connected to an individual server. That is, a personal area network (PAN) connection between a gateway and the tag is required.

The electronic tag according to the related art includes a display in order to output information related to the product on a display. As a display in the electronic tag, there may be provided an electrophoretic display (EPD).

The electrophoretic display has a relatively higher contrast ratio than an existing twisted nematic (TN) liquid crystal display (LCD).

However, since the EPD used in the electronic tag according to the related art has a structure in which an arrangement of dipole spherical bodies is changed by an external electric field, when an extended period of time elapses in the state in which the dipole spherical bodies have a specific arrangement, the arrangement of the dipole spherical bodies may be degraded, such that a contrast ratio of the display decreases.

The following Related Art Document (Patent Document 1), which relates to a radio frequency identification (RFID) tag and a driving method thereof, which, however, does not disclose technical features of periodically refreshing a display in the case in which a data update is not performed within a preset period of time.

### [Related Art Document]

(Patent Document 1) Korean Patent Laid-Open Publication No. 10-2007-0080739

### SUMMARY OF THE INVENTION

An aspect of the present invention provides an electronic tag device, an electronic shelf labeling system, and a display refresh method of an electronic tag device capable of periodically refreshing a display in the case in which there is no data update for a preset period of time.

According to an aspect of the present invention, there is provided an electronic tag device including: a wireless communications unit performing wireless communications according to a preset communications protocol; a control unit controlling communications with a plurality of gateways and a server through the wireless communications unit and controlling an output of data included in a received signal to a display; a memory unit storing the data therein according to the controlling of the control unit; a display unit outputting the data to the display according to the controlling of the control unit; and a power supply unit supplying operating power according to the controlling of the control unit, wherein the control unit refreshes the display unit when a preset display refresh condition is satisfied.

The control unit may include: a display refresh processor determining whether or not a data update signal is present until a preset reference time elapses as the display refresh condition and generating a display refresh signal when it is determined that the data update signal is not present; and a display driver refreshing the display unit according to the display refresh signal.

The display refresh processor may initialize a preset elapse time when it is determined that the data update signal is present, count the elapse time when it is determined that the data update signal is not present, and generate the display refresh signal when the elapse time exceeds the reference time.

The control unit may include: a display refresh processor determining whether or not a display refresh command signal has been received from the server as the display refresh condition and generating a display refresh signal when it is determined that the display refresh command signal has been received; and a display driver refreshing the display unit according to the display refresh signal.

According to another aspect of the present invention, there is provided an electronic shelf labeling system including: a plurality of electronic tag devices; a server transmitting a display refresh command signal to a corresponding electronic tag device when a data update for each of the plurality of electronic tag devices in a network to which the server belongs is not performed until a preset reference time elapses; and gateways wirelessly transmitting the signal from the server to the corresponding electronic tag device, wherein each of the plurality of electronic tag devices performs display refresh when a preset display refresh condition is satisfied.

Each of the plurality of electronic tag devices may include: a wireless communications unit performing wireless communications according to a preset communications protocol; a control unit controlling communications with the plurality of gateways and the server through the wireless communications unit and controlling an output of data included in the received signal to a display, the data update, and the display refresh; a memory unit storing the data therein according to the controlling of the control unit; a display unit performing the output of the data to the display, the data update, and the display refresh according to the controlling of the control unit; and a power supply unit supplying operating power according to the controlling of the control unit, the control unit refreshing the display unit when the display refresh condition is satisfied.

The control unit may include: a display refresh processor determining whether or not the display refresh command signal has been received from the server as the display refresh condition and generating the display refresh signal when it is determined that the display refresh command signal has been received; and a display driver refreshing the display unit according to the display refresh signal.

According to another aspect of the present invention, there is provided a display refresh method of an electronic tag device provided in an electronic shelf labeling system and having a display unit, the display refresh method including: generating a display refresh signal when a preset display refresh condition is satisfied; determining whether or not the display refresh signal has been generated and performing an operation of determining the display refresh condition when it is determined that the display refresh signal has not been generated; and performing a display refresh operation when it is determined that the display refresh signal has been generated.

The generating of the display refresh signal may include: initializing a preset elapse time when a data update signal is present; measuring the elapse time when the data update signal is not present; and generating the display refresh signal when the elapse time exceeds the reference time.

The generating of the display refresh signal may include: determining whether or not a display refresh command signal has been received from a server as the display refresh condition; and generating the display refresh signal when it is determined that the display refresh command signal has been received from the server.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a schematic configuration diagram of an electronic shelf labeling system according to an embodiment of the present invention;
FIG. 2 is a block diagram of an electronic tag device of the electronic shelf labeling system according to the embodiment of the present invention;
FIG. 3 is a block diagram of a control unit according to the embodiment of the present invention;
FIG. 4 is a conceptual diagram of a structure of an application of a display unit according to the embodiment of the present invention;
FIG. 5 is a transition diagram of a contrast ratio of a display according to the embodiment of the present invention;
FIG. 6 is a flowchart showing a display refresh method of the electronic tag device according to the embodiment of the present invention;
FIG. 7 is a diagram showing a first implementation of a display refresh signal generating operation according to the embodiment of the present invention;
FIG. 8 is a diagram showing a second implementation of a display refresh signal generating operation according to the embodiment of the present invention;
FIG. 9 is a transition diagram of a contrast ratio according to display refresh according to the embodiment of the present invention;
FIG. 10 is a diagram showing a rise in a display refresh contrast ratio according to the embodiment of the present invention;
FIG. 11 is a transition diagram of a contrast ratio according to display refresh and data update according to the embodiment of the present invention; and
FIG. 12 is a conceptual diagram of data update and refresh control of each electronic tag device of the electronic shelf labeling system according to the embodiment of the present invention.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions of elements may be exaggerated for clarity, and the same reference numerals will be used throughout to designate the same or like elements.

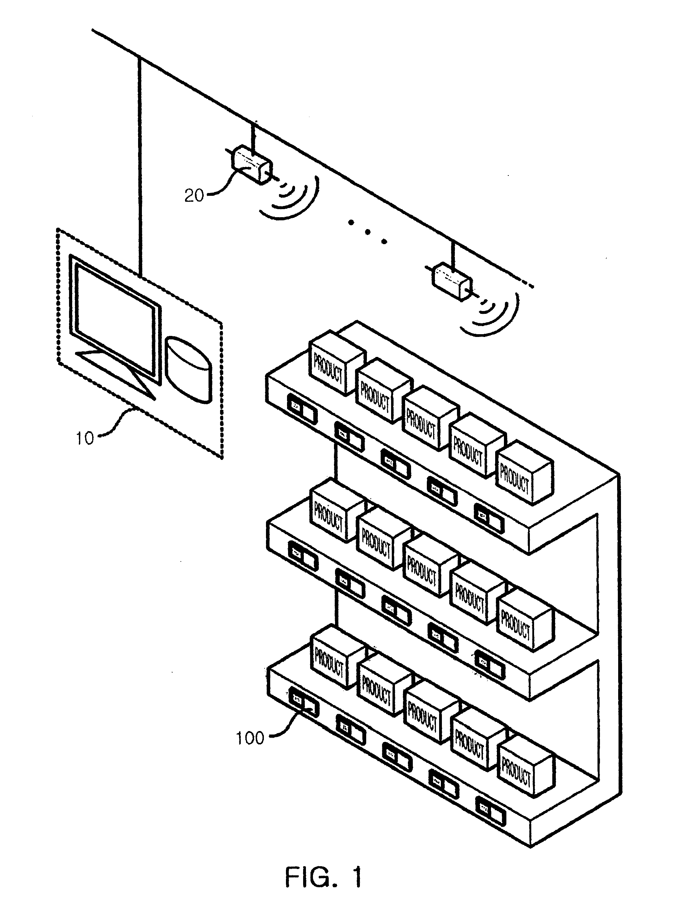

FIG. 1 is a schematic configuration diagram of an electronic shelf labeling system according to an embodiment of the present invention.

Referring to FIG. 1, the electronic shelf labeling system may include a server 10, gateways 20, and electronic tag devices 100.

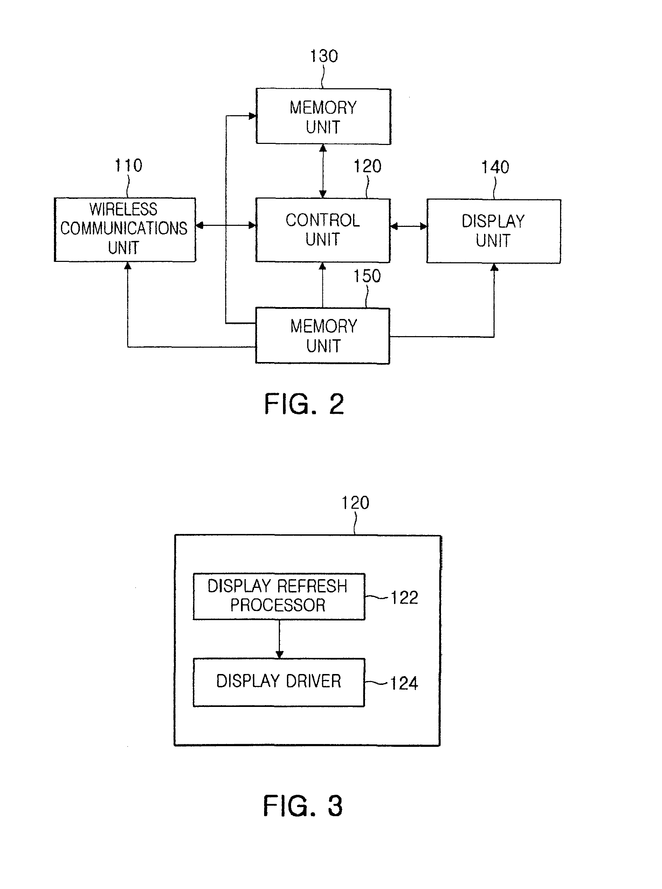

FIG. 2 is a block diagram of an electronic tag device of the electronic shelf labeling system according to the embodiment of the present invention.

Referring to FIG. 2, the electronic tag device of the electronic shelf labeling system according to the embodiment of the present invention may include a wireless communications unit 110 performing wireless communications according to a preset communications protocol, a control unit 120 controlling communications with a plurality of gateways and a server through the wireless communications unit 110 and controlling an output of data included in a received signal to a display, a memory unit 130 storing the data therein according to the controlling of the control unit 120, a display unit 140 outputting the data to the display according to the controlling of the control unit 120, and a power supply unit 150 supplying operating power according to the controlling of the control unit 120, wherein the control unit 120 may refresh the display unit 140 when a preset display refresh condition is satisfied.

Meanwhile, referring to FIGS. 1 through 3, the electronic shelf labeling system according to the embodiment of the present invention may include the plurality of electronic tag devices 100, the server 10 transmitting a display refresh command signal to the corresponding electronic tag device when data update for each of the plurality of electronic tag devices 100 in a network to which the server belongs is not performed until a preset reference time (TS) elapses, and the gateways 20 wirelessly transmitting the signal from the server 10 to the corresponding electro tag device, wherein each of the plurality of electronic tag devices may perform display refresh when the preset display refresh condition is satisfied.

In the electronic shelf labeling system shown in FIG. 1, the server 10 may transmit the display refresh command signal to the corresponding electronic tag device when the data update for each of the plurality of electronic tag devices 100 in the network to which the server 10 belongs is not performed until the preset reference time (TS) elapses.

The gateway 20 may wirelessly transmit the signal provided by the server 10 to the corresponding electronic tag device.

In addition, each of the plurality of electronic tag devices may perform the display refresh when the preset display refresh condition is satisfied.

In the electronic tag device shown in FIG. 1, the wireless communications unit 110 may perform the wireless communications with the plurality of gateways and the server according to the preset protocol.

The control unit 120 may control communications with the plurality of gateways and the server through the wireless communications unit 110 and control the output of the data included in the received signal to the display.

The memory unit 130 may store the data therein according to the controlling of the control unit 120. Here, the data may include product information such as a product name, a manufacturer, a manufacturing date, an expiration date, and the like, update information, and refresh information.

The display unit 140 may output the data to the display according to the controlling of the control unit 120. In this case, the display unit 140 may be an electrophoretic display (EPD).

In addition, the power supply unit 150 may supply the operating power according to the controlling of the control unit 120 and supply, for example, power required for each of the wireless communications unit 110, the control unit 120, the memory unit 130, and the display unit 140.

Particularly, the control unit 120 may refresh the display unit 140 when the preset display refresh condition is satisfied.

Meanwhile, the display refresh condition that may be applied to each embodiment of the present invention may be a self refresh condition and an external command refresh condition.

First, the self refresh condition is a condition in which the electronic tag device performs the refresh in itself. In this condition, it is determined whether or not a data update signal is present until the preset reference time (TS) elapses.

Second, the external command refresh condition is a condition in which the server monitors the plurality of electronic tag devices and transmits the refresh command signal to the electronic tag device requiring the refresh. In this condition, it is determined whether or not the display refresh command signal is received from the server.

FIG. 3 is a block diagram of a control unit according to the embodiment of the present invention.

Referring to FIG. 3, the control unit 120 will be described in connection with the self refresh condition.

The control unit 120 may include a display refresh processor 122 determining whether or not a data update signal is present until a preset reference time (TS) elapses as a display refresh condition and generating a display refresh signal in the case in which it is determined that the data update signal is not present, and a display driver 124 refreshing the display unit 140 according to the display refresh signal.

In the control unit 120 shown in FIG. 3, the display refresh processor 122 may determine whether or not the data update signal is present until the preset reference time (TS) elapses as the display refresh condition and generate the display refresh signal in the case in which it is determined that the data update signal is not present. For example, the display refresh processor 122 may initialize a preset elapse time (TC) in the case in which it is determined that the data update signal is present, measure the elapse time (TC) in the case in which it is determined that the data update signal is not present, and generate the display refresh signal when the elapse time (TC) exceeds the reference time (TS).

In addition, the display driver 124 may refresh the display unit 140 according to the display refresh signal.

Meanwhile, referring to FIG. 3, the control unit 120 will be described in connection with the external command refresh condition.

The control unit 120 may include the display refresh processor 122 determining whether or not a display refresh command signal has been received from the server as the display refresh condition and generating a display refresh signal in the case in which it is determined that the display refresh command signal has been received and the display driver 124 refreshing the display unit 140 according to the display refresh signal.

In the control unit 120 shown in FIG. 3, the display refresh processor 122 may determine whether or not the display refresh command signal has been received from the server until the preset reference time (TS) elapses as the display refresh condition and generate the display refresh signal in the case in which it is determined that the display refresh command signal has been received.

In addition, the display driver 124 may refresh the display unit 140 according to the display refresh signal.

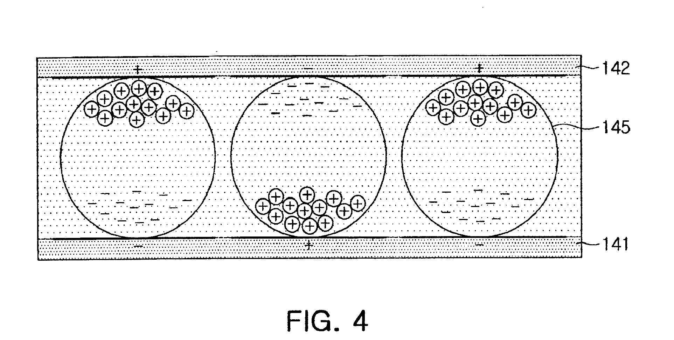

FIG. 4 is a conceptual diagram of a structure of an application of a display unit according to the embodiment of the present invention.

Referring to FIG. 4, in the case in which an electrophoretic display (EPD) is used as the display unit 140, the EPD may include a lower sheet 141, an upper sheet 142, and dipole spherical bodies positioned between the upper and lower sheets 142 and 141 and having a positive (+) pole and a negative (-) pole. The dipole spherical body has one surface being white and the other surface being black and is rotated by an external electric field, such that the one surface of the dipole spherical body being white or the other surface thereof being black is exposed to the outside.

Since the EPD has a structure in which the position of internal dipole spherical bodies is changed and fixed by the external electric field, as described above, when an extended period of time elapses in any state, the arrangement of the dipole spherical bodies is degraded, such that a contrast ratio of the display unit decreases.

In order to prevent the decrease in the contrast ratio of the display unit, an operation of refreshing the display at an interval of the reference time (TS) is required.

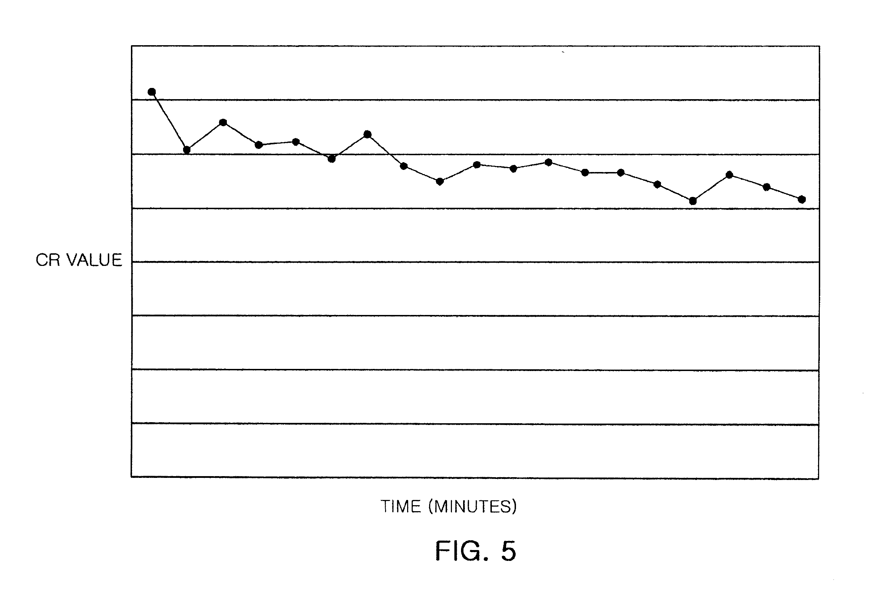

FIG. 5 is a transition diagram of a contrast ratio of a display according to the embodiment of the present invention.

FIG. 5 is a graph showing a transition of an initial contrast ratio (CR init) and a contrast ratio immediately after the electronic tag device changes the display with the passage of time.

In FIG. 5, due to characteristics of the electronic tag device in view of use, since the electronic tag device allocated to a product of which a cost is not changed for several months or several years does not change the display for a long period of time, the contrast ratio of the electronic tag device has gradually decreased with the passage of time after the display is changed.

For the above-mentioned reason, in the case of maintaining a display state of the electronic tag device at an appropriate level or more of contrast ratio, the display needs to be refreshed at a predetermined time interval.

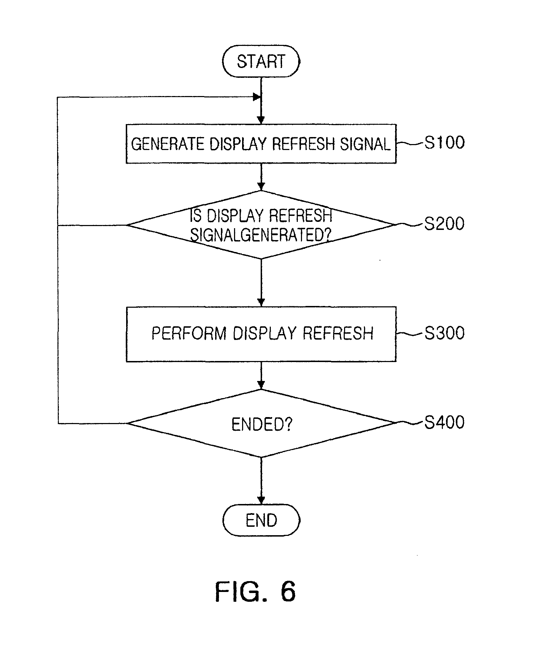

FIG. 6 is a flowchart showing a display refresh method of the electronic tag device according to the embodiment of the present invention.

Referring to FIG. 6, the display refresh method of the electronic tag device according to the embodiment of the present invention, which is a display refresh method of an electronic tag device provided in an electronic shelf labeling system and having a display unit, may include generating a display refresh signal when a preset display refresh condition is satisfied (S100), determining whether or not the display refresh signal has been generated and performing an operation of determining the display refresh condition when it is determined that the display refresh signal has not been generated (S200), and performing a display refresh operation when it is determined that the display refresh signal has been generated (S300).

In the display refresh method of the electronic tag device shown in FIG. 6, the display refresh signal may be generated in operation S100 when the preset display refresh condition is satisfied.

Next, in operation S200, it is determined whether or not the display refresh signal has been generated, and the operation of determining the display refresh condition is performed when it is determined that the display refresh signal has not been generated.

Next, in operation S300, the display refresh operation is performed when it is determined that the display refresh signal has been generated.

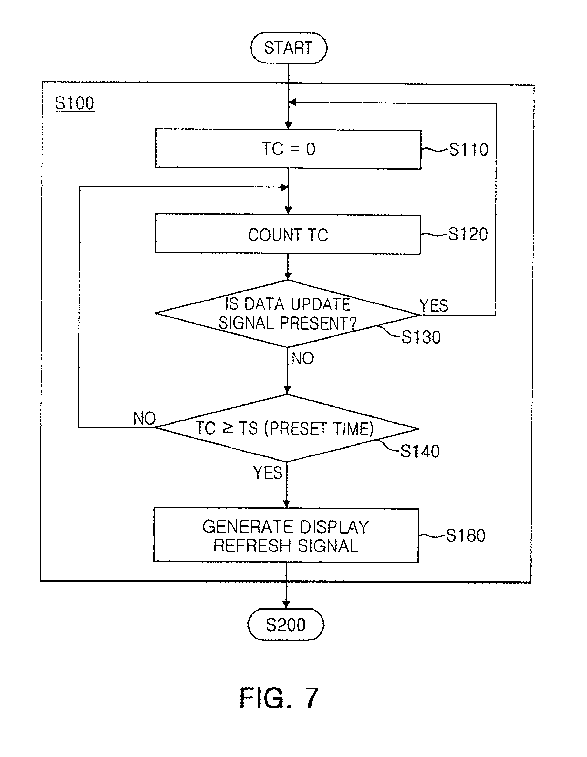

FIG. 7 is a diagram showing a first implementation of a display refresh signal generating operation according to the embodiment of the present invention.

Referring to FIG. 7, the operation S100 of generating the display refresh signal may include initializing a preset elapse time (TC) (S110) when a data update signal is present (S130), measuring the elapse time (TC) (S120) when the data update signal is not present (S130), and generating the display refresh signal (S180) when the elapse time (TC) exceeds the reference time (TS) (S140).

In the operation S100 of generating the display refresh signal shown in FIG. 7, the preset elapse time (TC) may be initialized when the data update signal is present (S130), the elapse time (TC) may be counted when the data update signal is not present, and the display refresh signal may be generated (S180) when the elapse time (TC) exceeds the reference time (TS) (S140).

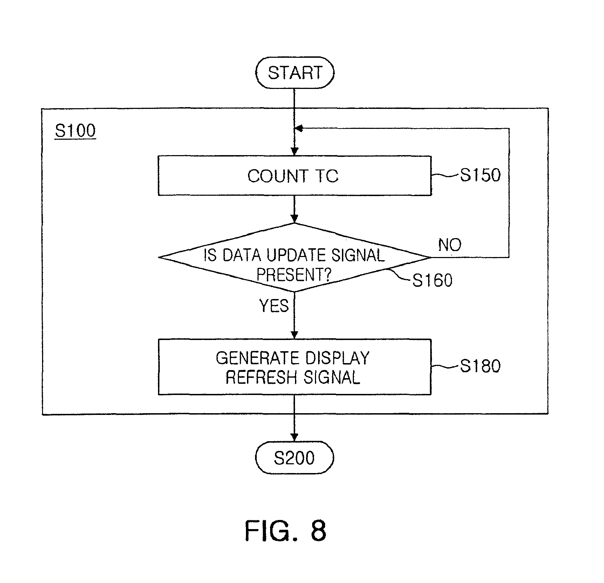

FIG. 8 is a diagram showing a second implementation of a display refresh signal generating operation according to the embodiment of the present invention.

Referring to FIG. 8, the operation S100 of generating the display refresh signal may include determining whether or not the display refresh command signal has been received from the server as the display refresh condition (S150) and generating the display refresh signal (S180) in the case in which it is determined that the display refresh command signal has been received from the server (S160).

In the operation S100 of generating the display refresh signal shown in FIG. 8, whether or not the display refresh command signal has been received from the server may be determined as the display refresh condition (S150), and the display refresh signal may be generated (S180) in the case in which it is determined that the display refresh command signal has been received from the server (S160).

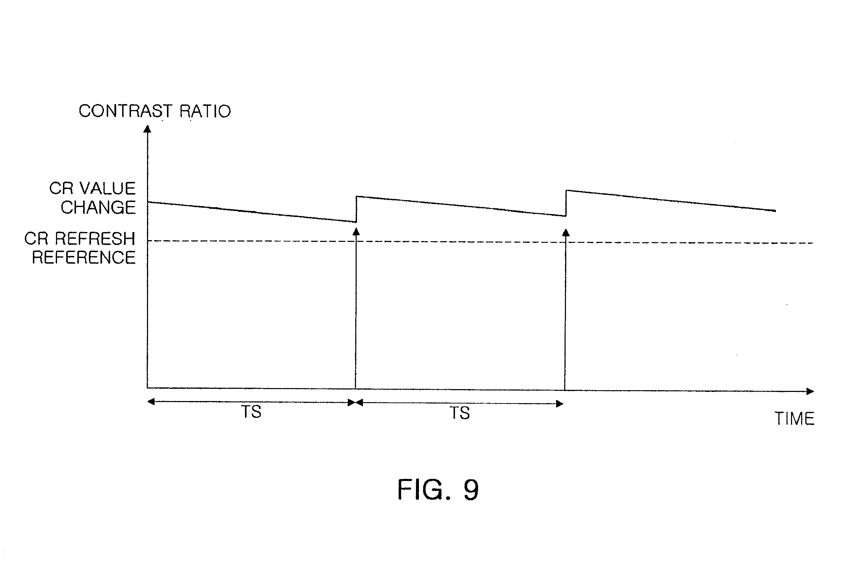

FIG. 9 is a transition diagram of a contrast ratio according to display refresh according to the embodiment of the present invention. Referring to FIG. 9, as described above, in the embodiment of the present invention, in the case in which the data update signal is not present, the display refresh may be performed every reference time (TS). It could be appreciated that a contrast ratio may be maintained to be a contrast ratio refresh reference or more by the above-mentioned display refresh.

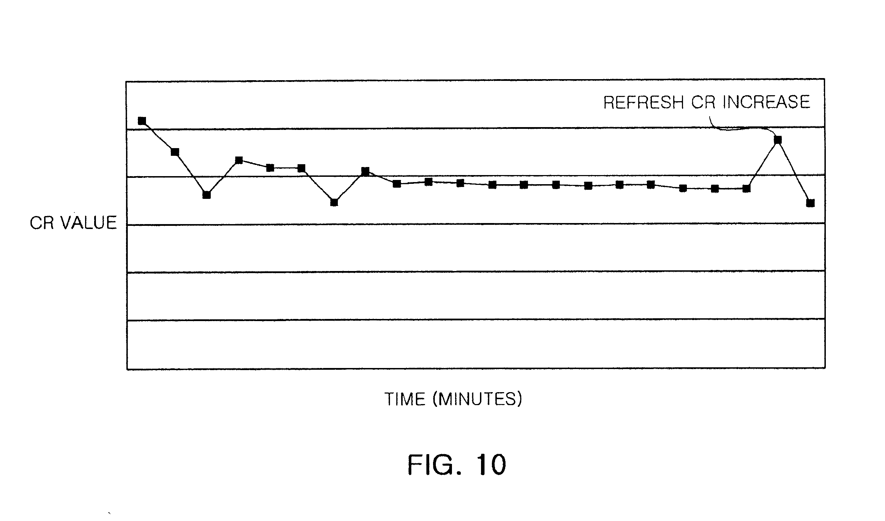

FIG. 10 is a diagram showing a rise in a display refresh contrast ratio according to the embodiment of the present invention. Referring to FIG. 10, with respect to a change in that a display contrast ratio of the electronic tag device is decreased with the passage of time, a refresh operation of displaying a final display once again is performed, whereby the contrast ratio of the display may be increased once again.

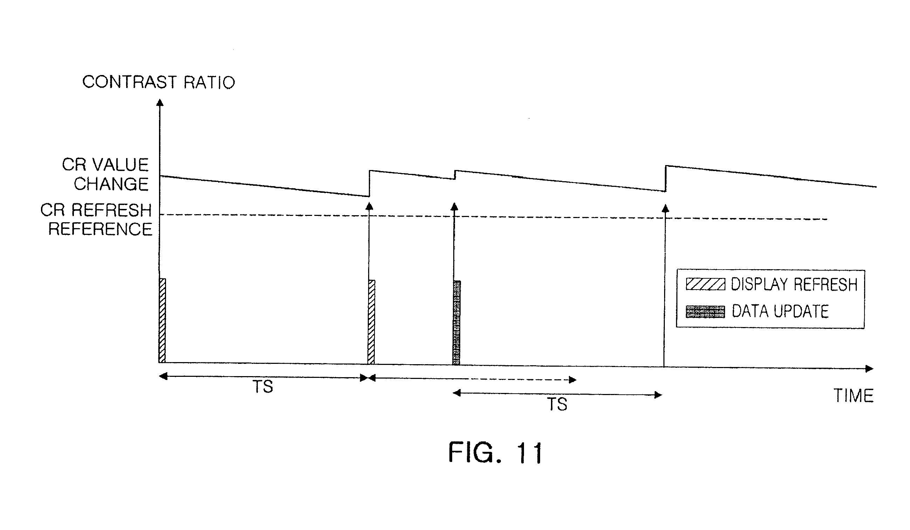

FIG. 11 is a transition diagram of a contrast ratio according to display refresh and data update according to the embodiment of the present invention.

Referring to FIG. 11, after the display refresh is performed, in the case in which the data update signal is present, an elapse time (TS) is again counted from this point in time.

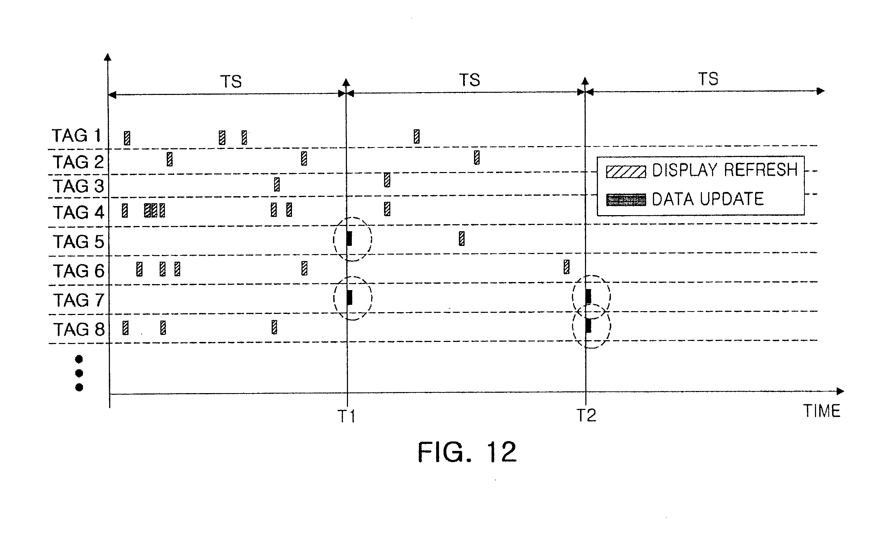

FIG. 12 is a conceptual diagram of data update and refresh control of each electronic tag device of the electronic shelf labeling system according to the embodiment of the present invention.

Referring to FIG. 12, the server 10 of the electronic shelf labeling system according to the embodiment of the present invention may transmit the display refresh command signal to the corresponding electronic tag device when the data update for each of the plurality of electronic tag devices 100 (TAG1, TAG2, TAG3, TAG4, TAG5, TAG6, TAG7, TAG8,...) is not performed until the preset reference time (TS) elapses.

For example, as shown in FIG. 12, when it is determined that the data update for TAGS and TAG7 has not been performed until the preset reference time (TS) elapses, the display refresh command signal may be transmitted to TAGS and TAG7.

As set forth above, according to embodiments of the present invention, in the case in which the a data update is not performed for a preset period of time, a display is periodically refreshed, whereby a contrast ratio of the display of an electronic tag device may be maintained to be a predetermined level or more.

While the present invention has been shown and described in connection with the embodiments, it will be apparent to those skilled in the art that modifications and variations can be made without departing from the spirit and scope of the invention as defined by the appended claims.

## Claims

1. An electronic tag device comprising:
a wireless communications unit performing wireless communications according to a preset communications protocol;
a control unit controlling communications with a plurality of gateways and a server through the wireless communications unit and controlling an output of data included in a received signal to a display;
a memory unit storing the data therein according to the controlling of the control unit;
a display unit outputting the data to the display according to the controlling of the control unit; and
a power supply unit supplying operating power according to the controlling of the control unit,
wherein the control unit refreshes the display unit when a preset display refresh condition is satisfied.

2. The electronic tag device of claim 1, wherein the control unit includes:
a display refresh processor determining whether or not a data update signal is present until a preset reference time elapses as the display refresh condition and generating a display refresh signal when it is determined that the data update signal is not present; and
a display driver refreshing the display unit according to the display refresh signal.

3. The electronic tag device of claim 2, wherein the display refresh processor initializes a preset elapse time when it is determined that the data update signal is present, counts the elapse time when it is determined that the data update signal is not present, and generates the display refresh signal when the elapse time exceeds the reference time.

4. The electronic tag device of claim 1, wherein the control unit includes:
a display refresh processor determining whether or not a display refresh command signal has been received from the server as the display refresh condition and generating a display refresh signal when it is determined that the display refresh command signal has been received; and
a display driver refreshing the display unit according to the display refresh signal.

5. An electronic shelf labeling system comprising:
a plurality of electronic tag devices;
a server transmitting a display refresh command signal to a corresponding electronic tag device when a data update for each of the plurality of electronic tag devices in a network to which the server belongs is not performed until a preset reference time elapses; and
gateways wirelessly transmitting the signal from the server to the corresponding electronic tag device,
wherein each of the plurality of electronic tag devices performs display refresh when a preset display refresh condition is satisfied.

6. The electronic shelf labeling system of claim 5, wherein each of the plurality of electronic tag devices includes:
a wireless communications unit performing wireless communications according to a preset communications protocol;
a control unit controlling communications with the plurality of gateways and the server through the wireless communications unit and controlling an output of data included in the received signal to a display, the data update, and the display refresh;
a memory unit storing the data therein according to the controlling of the control unit;
a display unit performing the output of the data to the display, the data update, and the display refresh according to the controlling of the control unit; and
a power supply unit supplying operating power according to the controlling of the control unit,
the control unit refreshing the display unit when the display refresh condition is satisfied.

7. The electronic shelf labeling system of claim 6, wherein the control unit includes:
a display refresh processor determining whether or not the display refresh command signal has been received from the server as the display refresh condition and generating the display refresh signal when it is determined that the display refresh command signal has been received; and
a display driver refreshing the display unit according to the display refresh signal.

8. A display refresh method of an electronic tag device provided in an electronic shelf labeling system and having a display unit, the display refresh method comprising:
generating a display refresh signal when a preset display refresh condition is satisfied;
determining whether or not the display refresh signal has been generated and performing an operation of determining the display refresh condition when it is determined that the display refresh signal has not been generated; and
performing a display refresh operation when it is determined that the display refresh signal has been generated.

9. The display refresh method of claim 8, wherein the generating of the display refresh signal includes:
initializing a preset elapse time when a data update signal is present;
measuring the elapse time when the data update signal is not present; and
generating the display refresh signal when the elapse time exceeds the reference time.

10. The display refresh method of claim 8, wherein the generating of the display refresh signal includes:
determining whether or not a display refresh command signal has been received from a server as the display refresh condition; and
generating the display refresh signal when it is determined that the display refresh command signal has been received from the server.

## Amended claims

### Amended claims in accordance with Rule 137(2) EPC.

**1.** An electronic tag device comprising:
a wireless communications unit performing wireless communications according to a preset communications protocol;
a control unit controlling communications with a plurality of gateways and a server through the wireless communications unit and controlling an output of data included in a received signal to a display;
a memory unit storing the data therein according to the controlling of the control unit;
a display unit outputting the data to the display according to the controlling of the control unit; and
a power supply unit supplying operating power according to the controlling of the control unit,
wherein the control unit refreshes the display unit when it is determined that a data update signal from the server is not present until a preset reference time elapses or when a display refresh command from the server is present as a display refresh condition.

**2.** The electronic tag device of claim 1, wherein the control unit includes:
a display refresh processor determining whether or not a data update signal is present until a preset reference time elapses as the display refresh condition and generating a display refresh signal when it is determined that the data update signal is not present; and
a display driver refreshing the display unit according
